# EUROPÄISCHE PATENTSCHRIFT

(11) **EP 3 819 604 B1**
(45) Veröffentlichungstag und Bekanntmachung des Hinweises auf die Patenterteilung: **26.07.2023**
(21) Anmeldenummer: 20201431.2
(22) Anmeldetag: 13.10.2020
(51) Int. Cl.: G01F 23/263, B60K 15/03

(54) **FLEXIBLER MEDIENBEHÄLTER**
FLEXIBLE MEDIA CONTAINER
RÉCIPIENT DE MÉDIAS SOUPLE

(30) Priorität: 05.11.2019 DE 102019217024
(43) Veröffentlichungstag der Anmeldung: 12.05.2021
(73) Patentinhaber: Continental Reifen Deutschland GmbH, 30165 Hannover (DE)
(72) Erfinder: Dohmen, Christian, 30419 Hannover (DE); Franke, Andreas Robert, 30419 Hannover (DE); Smolarz, Darius, 30419 Hannover (DE); Gatzweiler, Horst, 30419 Hannover (DE)
(74) Vertreter: Continental Corporation

(56) Entgegenhaltungen:
- WO-A1-2009/047310
- DE-A1- 10 345 708
- DE-A1-102009 038 744
- DE-A1-102013 107 205
- GB-A- 819 711
- US-A- 4 415 886

## Beschreibung

Die vorliegende Erfindung betrifft einen flexiblen Medienbehälter gemäß dem Oberbegriff des Patentanspruchs 1 sowie einen kombinierten Medienbehälter gemäß dem Patentanspruch 11.

Auf verschiedenen technischen Gebieten ist es erforderlich und bekannt, Medien wie insbesondere Fluide und Gase in Behältern zu speichern. Derartige Behälter können auch als Tanks bezeichnet werden. Werden Kraftstoffe wie z.B. Benzin, Diesel, Kerosin oder Gas gespeichert, so können diese Behälter als Kraftstoffbehälter oder als Kraftstofftank bezeichnet werden, welche mit der zu betreibende Maschine verbunden sind. Separate Behälter können als Lagerbehälter oder als Lagertanks bezeichnet werden. In jedem Fall werden derartige Behälter üblicherweise starr z.B. aus Stahl, Aluminium oder Kunststoff ausgebildet.

Um den Füllstand fluider Medien sensorisch erfassen zu können ist es bei derartigen starren Behältern bekannt, z.B. mechanische Messsysteme wie z.B. einen Schwimmschalter zu verwenden, welcher nach dem Verdrängungskörperprinzip arbeitet und auch als Hebelgeber bezeichnet werden kann.

Nachteilig ist bei Hebelgeber, dass diese oftmals nicht in Sicherheitstanks eingesetzt werden können, da diese in der Regel mit einem Tankschaum zur Reduktion von Schwapp-Bewegungen und zur Verhinderung zur Bildung von explosiven Dampfgemischen ausgerüstet sind.

Alternativ werden auch Sonden, welche die elektrische Leitfähigkeit messen, zur Füllstandmessung eingesetzt. Derartige Sonden könne auch als Tauchrohrgeber oder als Kraftstoffgeber bezeichnet werden.

Nachteilig ist bei derartigen Sensoranordnungen insgesamt, dass der jeweilige Geber stets starr ausgebildet ist und somit vom Messprinzip her nur unzureichend bis gar nicht in einem flexiblen Medienbehälter verwendet werden kann.

Derartige flexible Medienbehälter können beispielsweise aus einem flexiblen flächigen Material als flexibler Medienkörper ausgebildet sein, welches ein Innenvolumen im Wesentlichen, d.h. bis auf wenigstens einen Einlass und bzw. oder Auslass, umschließt und das Medium aufnehmen kann. Ein derartiger flexibler Medienbehälter kann alleinig zur Aufnahme eines Mediums verwendet werden. Jedoch können auch ein starrer Außenbehälter und ein flexibler Innenbehälter miteinander kombiniert werden, um dem flexiblen Innenbehälter durch den starren Außenbehälter Stabilität und Schutz vor äußeren Einwirkungen zu geben. Wird dennoch der starre Außenbehälter deformiert oder durchdrungen, kann der flexible Innenbehälter dieser Einwirkung nachgeben und unbeschädigt bleiben, so dass auch bei einem beschädigten starren Außenbehälter das Medium im flexiblen Innenbehälter gehalten werden kann.

Beispielsweise beschreibt die DE 10 2013 107 205 A1 einen Medientank, insbesondere für Fahrzeuge, mit einer äußeren Tankummantelung, die im Wesentlichen vollständig geschlossen ist, und wenigstens einer Tanköffnung, über die ein Medium in den Medientank eingeführt und bzw. oder aus dem Medientank entnommen werden kann. Der Medientank weist eine flexible Blase auf, welche im Wesentlichen innerhalb der äußeren Tankummantelung angeordnet und mit der Tanköffnung medienführend verbunden ist sowie das Tankvolumen im Wesentlichen einschließt.

Wird somit, alleinig oder innerhalb eines starren Medienbehälters, ein flexibler Medienbehälter zur Speicherung von Medien verwendet, so muss sich ein bekannter Messwertgeber innerhalb des zu erfassenden Mediums befinden, um gemäß der zuvor beschriebenen Funktionsprinzipien den Füllstand des Mediums innerhalb des flexiblen Medienkörpers des flexiblen Medienbehälters erfassen zu können. Hierbei kann die starre Ausführung derartiger Messgeber problematisch sein, da der Füllstand des Mediums innerhalb des flexiblen Medienkörpers des flexiblen Medienbehälters auf diese Art und Weise unzutreffend erfasst werden kann. Ferner kann es erforderlich sein den flexiblen Medienkörper des flexiblen Medienbehälters zumindest dort, wo z.B. ein Tauchrohrgeber eingesetzt wird, zu verstärken, damit das Material des flexiblen Medienkörpers des flexiblen Medienbehälters nicht von dem Messgeber durchdrungen und damit der flexible Medienkörper des flexiblen Medienbehälters undicht werden kann.

Die GB 819,711 A offenbart einen Kapazitätssensor zur Messung des Füllstands in einem Kraftstofftank, bei dem auf einem flexiblen Träger eine Vielzahl filigraner Elektroden angeordnet ist. Aufgrund der feinen Elektrodengeometrie ist die Reichweite des Kapazitätssensors eingeschränkt, so dass dieser dicht am Kraftstoff auf der Innenseite des Medienkörpers angeordnet werden muss.

Die US 4,415,886 A offenbart einen flexiblen Drucktintenbehälter mit einem Kapazitätssensor zur Füllstandsmessung. Der Sensor weist zwei Metallfilm-Elektroden auf, die jeweils in gegenüberliegenden Wandungen des Behälters eingeschlossen sind.

Eine Aufgabe der vorliegenden Erfindung ist es, einen flexiblen Medienbehälter bzw. einen kombinierten Medienbehälter der eingangs beschriebenen Art bereit zu stellen, so dass dessen Möglichkeiten zur Bestimmung des Füllstands des Medium verbessert werden können. Insbesondere soll die Bestimmung des Füllstands des Mediums einfacher, kostengünstiger und bzw. oder verlässlicher erfolgen können. Zumindest soll eine Alternative zu bekannten derartigen flexiblen Medienbehältern bzw. zu bekannten derartigen kombinierten Medienbehältern geschaffen werden.

Die Aufgabe wird erfindungsgemäß durch einen flexiblen Medienbehälter mit den Merkmalen gemäß Patentanspruch 1 sowie durch einen kombinierten Medienbehälter mit den Merkmalen gemäß Patentanspruch 11 gelöst. Vorteilhafte Weiterbildungen sind in den Unteransprüchen beschrieben.

Somit betrifft die vorliegende Erfindung einen flexiblen Medienbehälter mit einem flexiblen Medienkörper, welcher ein Innenvolumen im Wesentlichen umschließt, und mit wenigstens einer ersten Behälteröffnung, welche ausgebildet ist, das Innenvolumen des flexiblen Medienkörpers mit dessen Umgebung zu verbinden. Mit anderen Worten wird von dem flexiblen Medienkörper ein Innenvolumen derart zugänglich umschlossen, dass dort ein Medium aufgenommen werden kann, welche durch die wenigstens eine Öffnung eingefüllt sowie entnommen werden kann. Ggfs. kann die Entnahme auch zusätzlich oder alternativ über eine zweite Öffnung erfolgen. Der flexible Medienkörper kann vorzugsweise ein elastomeres Material aufweisen bzw. zumindest im Wesentlichen hieraus bestehen.

Der flexible Medienbehälter ist gekennzeichnet durch wenigstens ein flexibles Sensorelement, welches derart ausgebildet und angeordnet ist, wenigstens eine elektrische Eigenschaft, vorzugsweise eine elektrische Kapazität, zumindest abschnittsweise innerhalb des Innenvolumens des flexiblen Medienkörpers zu erfassen, so dass aus der erfassten elektrischen Eigenschaft, vorzugsweise aus der erfassten elektrischen Kapazität, ein Rückschluss auf den Füllstand eines Mediums im Innenvolumen des flexiblen Medienkörpers gezogen werden kann. Die Flexibilität des Sensorelements z.B. als gedruckte Elektronik, wie weiter unten noch näher beschrieben werden wird, ist dabei als Materialeigenschaft zu verstehen.

Der vorliegenden Erfindung liegt dabei die Erkenntnis zugrunde, dass zahlreiche Medien wie z.B. Kraftstoffe aber auch Wasser elektrische Eigenschaften wie z.B. eine elektrische Kapazität aufweisen, welche, vorzugsweise linear, von der Menge des Mediums abhängig ist. Wird nun diese elektrische Eigenschaft im Innenvolumen des flexiblen Medienkörpers sensorisch erfasst, kann hieraus auf den Füllstand des entsprechenden Mediums im Innenvolumen des flexiblen Medienkörpers geschlossen werden. Hierdurch kann wenigstens zwischen gewissen charakteristisch zu unterscheidenden Füllständen des entsprechenden Mediums im Innenvolumen des flexiblen Medienkörpers wie z.B. "voll" oder "nicht voll" sowie "voll", "halb voll" oder "leer" unterschieden werden. Auch können ggfs. genauere und konkretere Angaben z.B. prozentual bezogen auf einen maximalen Füllstand des entsprechenden Mediums im Innenvolumen des flexiblen Medienkörpers getätigt werden.

Mit anderen Worten kann anstelle einer Bestimmung des Füllstands des Mediums im Innenvolumen des flexiblen Medienbehälters, d.h. direkt im Medium selbst, eine Bestimmung des Füllstands des Mediums im Innenvolumen des flexiblen Medienbehälters über den flexiblen Medienkörper bzw. über das dort angeordnete flexible Sensorelement erfolgen. Dies kann ggfs. kontaktlos erfolgen, d.h. ohne direkten Kontakt zwischen Medium und flexiblen Sensorelement, wie weiter unten noch näher beschrieben werden wird.

Vorteilhaft ist hierbei insbesondere, dass sich das flexible Sensorelement zusammen mit dem flexiblen Medienkörper an das sich ändernde Volumen des aufgenommenen Mediums anpassen kann. Auch können auf diese Art und Weise Füllstandsmessungen auch bei komplexen Formen des flexiblen Medienkörpers mit geringem Bauraum im Inneren des flexiblen Medienkörpers ermöglicht werden. Ferner kann sich ein Gewichtsvorteil gegenüber gängigen Tankgebern ergeben.

Ein derartiger flexibler Medienbehälter kann beispielsweise in Kraftfahrzeugen wie z.B. bei Lastkraftwagen (Lkw), Bussen, Motorrädern und dergleichen angewendet werden, was zum mechanischen Schutz des flexiblen Medienbehälters üblicherweise als flexibler Innenbehälter eines kombinierten Medienbehälters gemäß dem Patentanspruch 15 innerhalb eines starren Außenbehälters geschehen kann, wie weiter unten noch näher beschrieben werden wird. Derartige kombinierte Medienbehälter werden üblicherweise am Fahrzeuggestell außen angebracht. Dies kann ebenso für Personenkraftwagen (Pkw) sowie im Motorsport gelten, wobei hier ein derartiger kombinierter Medientank üblicherweise innerhalb der Karosserie angeordnet ist. Auch kann ein derartiger flexibler Medienbehälter z.B. bei Flugzeugen oder bei Helikoptern, bzw. Starr- und Dreh-Flüglern, eingesetzt und in diesem Fall in Hohlräumen bzw. in Kavitäten (Englisch: cavities) z.B. der Tragflächen oder im Rumpf (engl. Fuselage) angeordnet werden.

Bei derartigen Anwendungen werden üblicherweise Kraftstoffe wie Benzin, Diesel oder Kerosin als Medien bzw. als Fluide aufzunehmen sein, weshalb der flexible Medienbehälter auch als flexibler Medientank bezeichnet werden kann. Z.B. bei Lkws kann jedoch auch ein Harnstoff zur Reduzierung der Stickstoffbelastung im Abgas von einem derartigen flexiblen Medienbehälter aufgenommen werden.

Der erfindungsgemäße flexible Medienbehälter kann auch zur Aufnahme anderer Medien wie z.B. als Wasserspeicher dienen, sofern das aufzunehmende Medium eine entsprechende elektrische Eigenschaft aufweist, welche wie zuvor beschrieben einen verlässlichen Rückschluss auf den Füllstand des entsprechenden Mediums im Innenvolumen des flexiblen Medienkörpers erlaubt. Dies können z.B. stationäre Wasserspeicher und dergleichen sein.

Gemäß einem Aspekt der Erfindung weist das flexible Sensorelement eine erste Elektrode und eine zweite Elektrode auf, welche ausgebildet und angeordnet sind, zwischen sich eine elektrische Kapazität als elektrische Eigenschaft zu erfassen. Auf diese Art und Weise kann die Erfassung der elektrischen Kapazität innerhalb des Innenvolumens des flexiblen Medienkörpers erfolgen, um hieraus einen Rückschluss auf den Füllstand eines Mediums im Innenvolumen des flexiblen Medienkörpers zu ziehen. Die elektrische Kapazität des Mediums im Innenvolumen des flexiblen Medienkörpers kann als elektrische Eigenschaft des Mediums hierfür besonders geeignet sein, da sich die elektrische Kapazität des Mediums auf diese Art und Weise vergleichsweise genau und zuverlässig sensorisch erfassen und auswerten lassen kann. Insbesondere kann die elektrische Kapazität des Mediums über den Füllstand im Innenvolumen des flexiblen Medienkörpers einen zumindest im Wesentlichen linearen Verlauf aufweisen, welcher sich für den flexiblen Medienbehälter z.B. im Labor bestimmen bzw. berechnen lassen und somit zu vergleichsweise genauen Angaben hinsichtlich des Füllstands im Innenvolumen des flexiblen Medienkörpers führen kann. Dies kann die Umsetzung der vorliegenden Erfindung begünstigen. Die Steigung des linearen Verlaufs kann dabei von der Dielektrizitätskonstante des jeweiligen Mediums abhängen.

Gemäß einem weiteren Aspekt der Erfindung sind die erste Elektrode und die zweite Elektrode angeordnet, zumindest abschnittsweise zwischen sich die elektrische Kapazität durch das Innenvolumen des flexiblen Medienkörpers hindurch zu erfassen. Dies kann die Genauigkeit bzw. die Verlässlichkeit der zuvor beschriebenen sensorischen Erfassung der elektrischen Kapazität des Mediums im Innenvolumen des flexiblen Medienkörpers begünstigen und damit auch die hieraus resultierende Bestimmung des Füllstands des Mediums im Innenvolumen des flexiblen Medienkörpers.

Erfindungsgemäß ist bzw. sind die erste Elektrode und bzw. oder die zweite Elektrode punktartig ausgebildet. Dies kann den Aufwand der Umsetzung der beiden Elektroden des flexiblen Sensorelements geringhalten. Dies kann ebenso für die hiermit verbundenen Kosten sowie für den erforderlichen Bauraum gelten. Andererseits kann dies die Genauigkeit der Erfassung der elektrischen Kapazität reduzieren, falls der Füllstand des Mediums unterhalb der beiden Elektroden liegt und somit die Kapazität im Wesentlichen am Medium vorbei erfasst wird. Daher kann eine derartige Anordnung bzw. Ausbildung der beiden Elektroden eher für die Erfassung eines konkreten Füllstands des Mediums im Innenvolumen des flexiblen Medienkörpers wie z.B. eines maximalen Füllstands des Mediums im Innenvolumen des flexiblen Medienkörpers geeignet sein.

Gemäß einem weiteren Aspekt der Erfindung ist bzw. sind die erste Elektrode und bzw. oder die zweite Elektrode länglich in der Höhe ausgebildet. Hierunter ist eine längliche Erstreckung in der Höhe zu verstehen, welche jedoch auch zumindest abschnittsweise schräg in der Höhe erfolgen kann. Dies kann die Erfassung der elektrischen Kapazität im Innenvolumen des flexiblen Medienkörpers über eine entsprechende Erstreckung in der Höhe erlauben bzw. begünstigen, so dass wenigstens über diesen Bereich eine möglichst genaue Erfassung der elektrischen Kapazität im Innenvolumen des flexiblen Medienkörpers und hieraus resultierend eine entsprechend genau Bestimmung des Füllstand des Mediums im Innenvolumen des flexiblen Medienkörpers erfolgen kann. Die Ausführungsformen, bei der die erste Elektrode und bzw. oder die zweite Elektrode länglich in der Höhe ausgebildet ist bzw. sind, fallen nicht unter den Anspruchsgegenstand.

Gemäß einem weiteren Aspekt der Erfindung ist das flexible Sensorelement, vorzugsweise ist bzw. sind dessen erste Elektrode und bzw. oder zweite Elektrode, als gedruckte Elektronik ausgebildet. Dies kann die Umsetzung des flexiblen Sensorelements auf dem Material des flexiblen Medienkörpern begünstigen und insbesondere die Herstellungskosten geringhalten.

Erfindungsgemäß weist der flexible Medienkörper wenigstens eine erste flexible Schicht auf, welche das Innenvolumen zumindest abschnittsweise umschließt, wobei das flexible Sensorelement, vorzugsweise dessen erste Elektrode und bzw. oder zweite Elektrode, auf der ersten flexiblen Schicht dem Innenvolumen abgewandt angeordnet ist. Auf diese Art und Weise kann ein direkter Kontakt des flexiblen Sensorelements mit dem Medium im Innenvolumen des flexiblen Medienkörpers vermieden werden. Dies kann das flexible Sensorelement für dem Medium schützen, um z.B. Korrosion und dergleichen zu vermeiden. Hierdurch kann die Langlebigkeit des flexiblen Sensorelements erhöht werden.

Erfindungsgemäß ist die erste flexible Schicht als Barriereschicht ausgebildet, das Medium im Innenvolumen zu halten. Mit anderen Worten ist die erste flexible Schicht in Abhängigkeit des Mediums, welches beim bestimmungsgemäßen Gebrauch im Innenvolumen des flexiblen Medienkörpers aufgenommen werden soll, ausgebildet, dieses dort zu halten und ein Durchdringen des Mediums durch die erste flexible Schicht hindurch zu verhindern.

Dabei kann die erste flexible Schicht einlagig als Barriereschicht ausgebildet sein. Alternativ kann die erste flexible Schicht auch zweilagig ausgebildet sein und eine innenliegende Lage dem Medium im Innenvolumen zugewandt und eine außenliegende Lage dem Medium im Innenvolumen abgewandt aufweisen, wobei die außenliegende Lage der ersten flexiblen Schicht die Barrierefunktion ausüben kann. Die innenliegende Lage der ersten flexiblen Schicht kann die außenliegende Lage der ersten flexiblen Schicht schützen.

Gemäß einem weiteren Aspekt der Erfindung weist der flexible Medienkörper wenigstens eine zweite flexible Schicht auf, welche dem Innenvolumen abgewandt auf der ersten Schicht und auf dem flexiblen Sensorelement, vorzugsweise auf dessen erster Elektrode und bzw. oder zweiter Elektrode, zumindest abschnittsweise angeordnet ist. Hierdurch kann das flexible Sensorelement zwischen den beiden flexiblen Schichten angeordnet werden, was den Halt des flexiblen Sensorelements auf der ersten flexiblen Schicht verbessern kann.

Gemäß einem weiteren Aspekt der Erfindung ist die zweite flexible Schicht als Schutzschicht ausgebildet, das flexible Sensorelement, vorzugsweise dessen erste Elektrode und bzw. oder zweite Elektrode, vor äußeren Einflüssen zu schützen. Derartige äußere Einflüsse können mechanische Einflüsse wie berührende bzw. abreibende Kontakte mit anderen Gegenständen ebenso sein wie z.B. Feuchtigkeit, elektrisch leitfähige Kontakte sowie Sonneneinstrahlung und dergleichen. Diese äußeren Einflüsse können das flexible Sensorelement beschädigen oder zerstören sowie dessen Funktion beeinträchtigen, weshalb ein entsprechender Schutz durch eine außenliegende zweite flexible Sensorschicht vorteilhaft sein kann. Diese zweite flexible Schicht als Schutzschicht kann entsprechende Materialeigenschaften aufweisen, um Schutz vor den zuvor genannten äußeren Einflüssen bieten zu können.

Gemäß einem weiteren Aspekt der Erfindung weist der flexible Medienbehälter wenigstens eine Auswerteeinheit auf, welche ausgebildet ist, eine erfasste elektrische Eigenschaft, vorzugsweise eine elektrische Kapazität, von dem flexiblen Sensorelement zu erhalten und aus der erfassten elektrischen Eigenschaft, vorzugsweise aus der erfassten elektrischen Kapazität, einen Rückschluss auf den Füllstand des Mediums im Innenvolumen des flexiblen Medienkörpers zu ziehen. Hierdurch kann die zuvor bereits beschriebene Auswertung der erfassten elektrischen Eigenschaft seitens des flexiblen Medienbehälters selbst erfolgen, so dass ein kompaktes und diese Information selbsttätig zur Verfügung stellendes Produkt geschaffen werden kann.

Gemäß einem weiteren Aspekt der Erfindung ist die Auswerteeinheit ausgebildet, die erfasste elektrische Eigenschaft, vorzugsweise die erfasste elektrische Kapazität, mit einem linearen Verlauf des Füllstands des Mediums im Innenvolumen des flexiblen Medienkörpers über der elektrischen Eigenschaft, vorzugsweise über der erfassten elektrischen Kapazität, zu vergleichen und in Abhängigkeit des Ergebnisses des Vergleichens den Füllstand des Mediums im Innenvolumen des flexiblen Medienkörpers zu bestimmen. Hierdurch kann die zuvor bereits beschriebene Auswertung der erfassten elektrischen Eigenschaft seitens des flexiblen Medienbehälters selbst erfolgen. Insbesondere kann auf diese Art und Weise ein kontinuierlicher Füllstands des Mediums im Innenvolumen des flexiblen Medienkörpers über dessen Höhe zumindest über den Bereich der Erstreckung des flexiblen Sensorelements bestimmt werden.

Gemäß einem weiteren Aspekt der Erfindung ist die Auswerteeinheit ausgebildet, die erfasste elektrische Eigenschaft, vorzugsweise die erfasste elektrische Kapazität, mit einem Grenzwert der elektrischen Eigenschaft, vorzugsweise der erfassten elektrischen Kapazität, zu vergleichen und in Abhängigkeit des Ergebnisses des Vergleichens bei Erreichen oder Überschreiten des Grenzwertes einen vorbestimmten Füllstand, vorzugsweise einen maximalen Füllstand, des Mediums im Innenvolumen des flexiblen Medienkörpers zu erkennen. Auf diese Art und Weise kann mittels der zuvor bereits beschriebenen Auswertung der erfassten elektrischen Eigenschaft zumindest eine Unterscheidung erfolgen, ob ein bestimmter Füllstand wie z.B. ein maximal zulässiger Füllstand des Mediums im Innenvolumen des flexiblen Medienkörpers erreicht ist oder nicht. Dies kann für manche Anwendungen eine ausreichende Information darstellen.

Gemäß einem weiteren Aspekt der Erfindung ist die Auswerteeinheit ausgebildet, eine Information und bzw. oder einen Hinweis über den Füllstand des Mediums im Innenvolumen des flexiblen Medienkörpers auszugeben. Dies kann z.B. eine Information über die Höhe des Füllstands des Mediums im Innenvolumen des flexiblen Medienkörpers wie z.B. "voll" oder "nicht voll" sowie "voll", "halb voll" oder "leer" sein. Auch können ggfs. genauere und konkretere Angaben z.B. prozentual bezogen auf einen maximalen Füllstand des entsprechenden Mediums im Innenvolumen des flexiblen Medienkörpers als Information ausgegeben werden. Derartige Informationen können einem Benutzer z.B. optisch auf einer Tankstandanzeige angezeigt werden.

Alternativ oder zusätzlich kann auch wenigstens ein Hinweis an den Benutzer z.B. optisch, haptisch und bzw. oder akustisch z.B. als Warnhinweis einmalig oder mehrmalig, insbesondere sich wiederholend, ausgegeben werden, falls z.B. ein vorbestimmter Füllstand des entsprechenden Mediums im Innenvolumen des flexiblen Medienkörpers unterschritten wird. Ebenso kann dies beim Befüllen des flexiblen Medienbehälters der Fall sein, falls ein maximal zulässiger Füllstand des entsprechenden Mediums im Innenvolumen des flexiblen Medienkörpers erreicht oder überschritten wird. Eine derartige Information könnte auch von dem flexiblen Medienbehälter direkt an eine entsprechende Befüllvorrichtung ausgegeben werden, um das Befüllen auch ohne Eingreifen des Benutzers zu beenden.

Die vorliegende Erfindung betrifft auch einen kombinierten Medienbehälter, insbesondere für Fahrzeuge, mit wenigstens einem flexiblen Medienbehälter wie zuvor beschrieben und mit einem starren Außenbehälter, welcher den flexiblen Medienbehälter im Wesentlichen umschließt. Auf diese Art und Weise können die zuvor beschrieben Eigenschaften und Vorteile eines erfindungsgemäßen flexiblen Medienbehälters in Kombination mit einem starren Außenbehälter z.B. bei einem Lkw genutzt werden, wie zuvor bereits beschrieben.

Mehrere Ausführungsbeispiele und weitere Vorteile der Erfindung werden nachstehend im Zusammenhang mit den folgenden Figuren erläutert. Darin zeigt:
- Fig. 1: eine schematische Schnittdarstellung eines flexiblen Medienbehälters gemäß einem ersten Ausführungsbeispiel;
- Fig. 2: eine schematische Schnittdarstellung eines erfindungsgemäßen flexiblen Medienbehälters gemäß einem zweiten Ausführungsbeispiel; und
- Fig. 3: eine schematische Schnittdarstellung eines kombinierten Medienbehälters mit dem flexiblen Medienbehälter gemäß dem ersten Ausführungsbeispiel.

Die Beschreibung der o.g. Figuren erfolgt in kartesischen Koordinaten mit einer Längsrichtung (nicht dargestellt), einer zur Längsrichtung senkrecht ausgerichteten Querrichtung Y sowie einer sowohl zur Längsrichtung als auch zur Querrichtung Y senkrecht ausgerichteten vertikalen Richtung Z. Die Längsrichtung kann auch als Tiefe, die Querrichtung Y auch als Breite Y und die vertikale Richtung Z auch als Höhe Z bezeichnet werden.

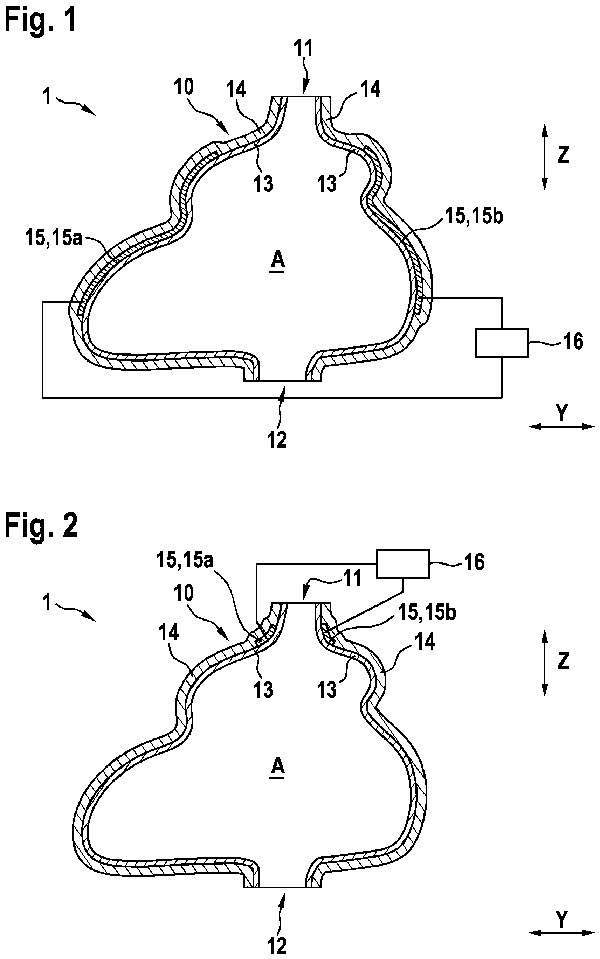

Ein flexibler Medienbehälter 1 gemäß dem ersten Ausführungsbeispiel der Figur 1 weist einen flexiblen Medienkörper 10 auf, welcher im Wesentlichen aus einem flexiblen Material wie z.B. aus einem elastomeren Material, z.B. aus Gummi, besteht. Der flexible Medienkörper 10 umschließt ein Innenvolumen A bzw. einen Innenraum A des flexiblen Medienbehälters 1 im Wesentlichen, welches ein Medium und insbesondere ein Fluid wie z.B. einen Kraftstoff speichernd aufnehmen kann. Der flexible Medienbehälter 1 kann daher auch als flexibler Medientank 1 bezeichnet werden.

Der flexible Medienkörper 10 weist in der Höhe Z oben eine erste Behälteröffnung 11 auf, welche auch als Tankeinlass 11 bezeichnet werden kann. In der Höhe Z unten weist der flexible Medienkörper 10 eine zweite Behälteröffnung 12 auf, welche auch als Tankauslass 12 bezeichnet werden kann. Durch den Tankeinlass 11 hindurch kann das zu speichernde Medium in das Innenvolumen A des flexiblen Medienkörpers 10 eingefüllt und durch den Tankauslass 12 dem Innenvolumen A des flexiblen Medienkörpers 10 wieder entnommen werden. Der Tankeinlass 11 kann z.B. durch einen Deckel (nicht dargestellt) verschlossen werden. Der Tankauslass 12 kann z.B. mit einem Schlauch (nicht dargestellt) verbunden sein, welcher z.B. mittels eines Ventils (nicht dargestellt) geöffnet und geschlossen werden kann.

Alternativ könnte der flexible Medienkörper 10 auch seitlich befüllt und die erste Behälteröffnung 11 als Tankeinlass 11 entsprechend angeordnet werden. Die erste Behälteröffnung 11 als Tankeinlass 11 könnte auch in der Höhe Z unten am flexiblen Medienkörper 10 angeordnet sein, falls z.B. über ein Rohrsystem befüllt wird. Auch können sich in der Höhe Z unten oder oben im flexiblen Medienkörper 10 eine oder mehrere Kraftstoffpumpen nebst einer oder mehrerer Vorförderpumpen (nicht dargestellt) befinden. Der flexible Medienkörper 10 könnte auch in der Höhe Z oben mit einer Platte oder mehreren Platten verschlossen werden, über welche alle Ein- und Auslässe des flexiblen Medienkörpers 10 geführt werden könnten.

Der flexible Medienkörper 10 weist zwei flexible Schichten 13, 14 auf, zwischen denen abschnittsweise ein flexibles Sensorelement 15 angeordnet ist. Die erste flexible Schicht 13 ist innenseitig angeordnet und begrenzt das Innenvolumen A des flexiblen Medienkörpers 10. Die erste flexible Schicht 13 kann daher auch als Innenschicht 13 des flexiblen Medienkörpers 10 bezeichnet werden. Die Innenschicht 13 ist aufgrund ihrer Materialeigenschaften dazu ausgebildet, das Medium im Innenvolumen des flexiblen Medienkörpers 10 zu halten, weshalb die Innenschicht 13 auch als Barriereschicht 13 bezeichnet werden kann.

Die zweite flexible Schicht 14 bedeckt die Innenschicht 13 bzw. das flexible Sensorelement 15 von der dem Innenvolumen A des flexiblen Medienkörpers 10 abgewandten Seite vollflächig und bildet die Außenseite des flexiblen Medienkörpers 10, weshalb die zweite flexible Schicht 14 auch als Außenschicht 14 bezeichnet werden kann. Das Material der Außenschicht 14 ist derart gewählt, dass sowohl die Innenschicht 13 als auch das flexible Sensorelement 15 vor äußeren Einflüssen wie z.B. mechanischen Belastungen, Feuchtigkeit, elektrisch leitfähigen Kontakten sowie Sonneneinstrahlung geschützt werden können. Die zweite flexible Schicht 14 kann daher auch als Schutzschicht 14 bezeichnet werden.

Sowohl die Innenschicht 13 als auch die Außenschicht 14 sind dabei hinsichtlich ihrer Materialeigenschaften flexibel ausgebildet, was z.B. durch die Verwendung von elastomeren Materialien wie z.B. Gummi bzw. mit Gummi beschichtete Gewebe als Basismaterial der Schichten 13, 14 erfolgen kann.

Das bereits erwähnte flexible Sensorelement 15 ist als gedruckte Elektronik ausgeführt, welche von außen auf die Innenschicht 13 aufgebracht ist. Das flexible Sensorelement 15 ist dabei ebenfalls hinsichtlich der Materialeigenschaften des Druckmaterials flexibel ausgebildet, so dass das flexible Sensorelement 15 die Flexibilität der Innenschicht 13 sowie der Außenschicht 14 nicht beeinträchtigt, sondern auf eine Volumenänderung des Innenvolumens A des flexiblen Medienkörpers 10 ebenso flexibel reagieren kann wie die Innenschicht 13 und die Außenschicht 14 des flexiblen Medienkörpers 10.

Das flexible Sensorelement 15 ist als kapazitiv messendes Sensorelement 15 derart ausgebildet, dass das flexible Sensorelement 15 eine erste Elektrode 15a und eine zweite Elektrode 15b aufweist, welche gemäß dem ersten Ausführungsbeispiel des flexiblen Medienbehälters 1 der Figur 1 jeweils sich in der Höhe Z direkt, d.h. geradlinig, linienförmig erstreckend ausgebildet sind. Beide Elektroden 15a, 15b erstrecken sich in der Höhe Z etwa vom Boden bzw. von dem Tankauslass 12 des flexiblen Medienkörpers 10 bis etwa zum Tankeinlass 11. Die beiden Elektroden 15a, 15b liegen einander in der Querrichtung Y gegenüber, so dass eine elektrische Kapazität zwischen den beiden Elektroden 15a, 15b durch das Innenvolumen A des flexiblen Medienkörpers 10 bzw. durch das dort befindliche Medium hindurch von dem flexiblen Sensorelement 15 erfasst werden kann.

Der flexible Medienbehälter 1 weist ferner eine Auswerteeinheit 16 auf, welche elektrisch leitfähig jeweils mit der ersten Elektrode 15a und mit der zweiten Elektrode 15b verbunden ist. Die Auswerteeinheit 16 kann somit die elektrische Kapazität zwischen den beiden Elektroden 15a, 15b als Eingangswert fortlaufend erhalten und die erfasste elektrische Kapazität mit einem vorbestimmten linearen Verlauf vergleichen, welche dem Füllstand des Mediums im Innenvolumen A des flexiblen Medienkörpers 10 über der elektrischen Kapazität entspricht. Auf diese Art und Weise kann der Füllstand des Mediums im Innenvolumen A des flexiblen Medienkörpers 10 vergleichsweise einfach und genau bestimmt werden. Diese Information kann seitens der Auswerteeinheit 16 ausgegeben werden, um diese Information z.B. einem Benutzer z.B. mittels einer Tankstandanzeige mitteilen zu können.

Gemäß dem zweiten Ausführungsbeispiel der Figur 2 sind die beiden Elektroden 15a, 15b des flexiblen Sensorelements 15 eher punktartig ausgebildet und nahe dem Tankeinlass 11 angeordnet. Auf diese Art und Weise kann die elektrische Kapazität dort sensorisch erfasst und seitens der Auswerteeinheit 16 mittels der erfassten elektrischen Kapazität durch Vergleich mit einem vorstimmten Grenz- bzw. Schwellwert der elektrischen Kapazität der Füllstand des Mediums im Innenvolumen A des flexiblen Medienkörpers 10 zumindest dahingehend erkannt werden, ob ein maximal zulässiger Füllstand des Mediums im Innenvolumen A des flexiblen Medienkörpers 10 erreicht ist oder nicht. Ist dies der Fall, kann dies einem Benutzer z.B. akustisch und optisch als Warnsignal mitgeteilt werden, um einen Befüllvorgang des flexiblen Medienbehälters 1 zu beenden.

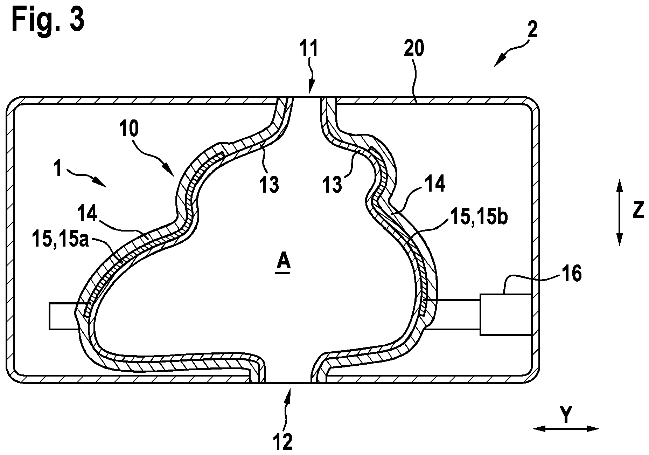

Die Figur 3 zeigt eine schematische Schnittdarstellung eines kombinierten Medienbehälters 2 mit dem flexiblen Medienbehälter 1 gemäß dem ersten Ausführungsbeispiel. Der flexible Medienbehälter 1 ist dabei als flexibler Innenbehälter 1 bzw. als flexibler Innentank 1 im Inneren eines starren Außenbehälters 20 angeordnet, welcher z.B. aus Aluminium, aus Stahlblech oder aus einem Faserverbundwerkstoff ausgebildet sein kann. Der Tankeinlass 11 und der Tankauslass 12 des flexiblen Innenbehälters 1 werden durch entsprechende Durchlassöffnungen des starren Außenbehälters 20 geführt. Der starre Außenbehälter 20 dient dem Schutz sowie dem Halt des flexiblen Innenbehälters 1.

Der flexible Innenbehälter 1 kann sich innerhalb des starren Außenbehälters 20 in Abhängigkeit der Menge des aufgenommenen Mediums ausdehnen und zusammenziehen. Alternativ könnte der flexible Innenbehälter 1 bzw. dessen flexibler Medienbehälter 10 bereits an die Kontur des starren Außenbehälters 20 angepasst sein. In jedem Fall kann der kombinierte Medienbehälter 2 auch als kombinierter Medientank 2 bzw. als kombinierter Kraftstofftank 2 bezeichnet werden.

### Bezugszeichenliste (Teil der Beschreibung)

- A: Innenvolumen bzw. Innenraum des flexibler Medienkörpers 10
- Y: Querrichtung; Breite
- Z: vertikale Richtung; Höhe

- 1: flexibler Medienbehälter bzw. Innenbehälter; flexibler Medientank bzw. Innentank

- 10: flexibler Medienkörper
- 11: erste Behälteröffnung; Tankeinlass
- 12: zweite Behälteröffnung; Tankauslass
- 13: erste flexible Schicht; Barriereschicht; Innenschicht
- 14: zweite flexible Schicht; Schutzschicht; Außenschicht
- 15: flexibles Sensorelement
- 15a: erste Elektrode des flexiblen Sensorelements 15
- 15b: zweite Elektrode des flexiblen Sensorelements 15
- 16: Auswerteeinheit

- 2: kombinierter Medienbehälter; kombinierter Medientank; kombinierter Kraftstofftank

- 20: starrer Außenbehälter

## Patentansprüche

1. Flexibler Medienbehälter (1)
mit einem flexiblen Medienkörper (10), welcher ein Innenvolumen (A) im Wesentlichen umschließt, und
mit wenigstens einer ersten Behälteröffnung (11), welche ausgebildet ist, das Innenvolumen (A) des flexiblen Medienkörpers (10) mit dessen Umgebung zu verbinden,
wobei wenigstens ein flexibles Sensorelement (15), welches derart ausgebildet und angeordnet ist, wenigstens eine elektrische Eigenschaft, vorzugsweise eine elektrische Kapazität, zumindest abschnittsweise innerhalb des Innenvolumens (A) des flexiblen Medienkörpers (10) zu erfassen, so dass aus der erfassten elektrischen Eigenschaft, vorzugsweise aus der erfassten elektrischen Kapazität, ein Rückschluss auf den Füllstand eines Mediums im Innenvolumen (A) des flexiblen Medienkörpers (10) gezogen werden kann, wobei der flexible Medienkörper (10) wenigstens eine erste flexible Schicht (13) aufweist, welche das Innenvolumen (A) zumindest abschnittsweise umschließt, wobei die erste flexible Schicht (13) als Barriereschicht (13) ausgebildet ist, das Medium im Innenvolumen (A) zu halten,
wobei eine erste Elektrode (15a) und/oder eine zweite Elektrode (15b) des Sensorelements (15), auf der ersten flexiblen Schicht (13) dem Innenvolumen (A) abgewandt angeordnet ist,
**dadurch gekennzeichnet, dass**
die erste Elektrode (15a) und/oder die zweite Elektrode (15b) punktartig ausgebildet ist/sind.

2. Flexibler Medienbehälter (1) nach Anspruch 1, **dadurch gekennzeichnet, dass**
das flexible Sensorelement (15) eine erste Elektrode (15a) und eine zweite Elektrode (15b) aufweist, welche ausgebildet und angeordnet sind, zwischen sich eine elektrische Kapazität als elektrische Eigenschaft zu erfassen.

3. Flexibler Medienbehälter (1) nach Anspruch 2, **dadurch gekennzeichnet, dass**
die erste Elektrode (15a) und die zweite Elektrode (15b) angeordnet sind, zumindest abschnittsweise zwischen sich die elektrische Kapazität durch das Innenvolumen (A) des flexiblen Medienkörpers (10) hindurch zu erfassen.

4. Flexibler Medienbehälter (1) nach einem der vorangehenden Ansprüche,
**dadurch gekennzeichnet, dass**
das flexible Sensorelement (15), vorzugsweise dessen erste Elektrode (15a) und/oder zweite Elektrode (15b), als gedruckte Elektronik ausgebildet ist.

5. Flexibler Medienbehälter (1) nach einem der vorangehenden Ansprüche,
**dadurch gekennzeichnet, dass**
der flexible Medienkörper (10) wenigstens eine zweite flexible Schicht (14) aufweist, welche dem Innenvolumen (A) abgewandt auf der ersten Schicht (13) und auf dem flexiblen Sensorelement (15), vorzugsweise auf dessen erster Elektrode (15a) und/oder zweiter Elektrode (15b), zumindest abschnittsweise angeordnet ist.

6. Flexibler Medienbehälter (1) nach Anspruch 5, **dadurch gekennzeichnet, dass**
die zweite flexible Schicht (14) als Schutzschicht (14) ausgebildet ist, das flexible Sensorelement (15), vorzugsweise dessen erste Elektrode (15a) und/oder zweite Elektrode (15b), vor äußeren Einflüssen zu schützen.

7. Flexibler Medienbehälter (1) nach einem der vorangehenden Ansprüche, **gekennzeichnet durch**
wenigstens eine Auswerteeinheit (16), welche ausgebildet ist, eine erfasste elektrische Eigenschaft, vorzugsweise eine elektrische Kapazität, von dem flexiblen Sensorelement (15) zu erhalten und aus der erfassten elektrischen Eigenschaft, vorzugsweise aus der erfassten elektrischen Kapazität, einen Rückschluss auf den Füllstand des Mediums im Innenvolumen (A) des flexiblen Medienkörpers (10) zu ziehen.

8. Flexibler Medienbehälter (1) nach Anspruch 7, **dadurch gekennzeichnet, dass**
die Auswerteeinheit (16) ausgebildet ist, die erfasste elektrische Eigenschaft, vorzugsweise die erfasste elektrische Kapazität, mit einem linearen Verlauf des Füllstands des Mediums im Innenvolumen (A) des flexiblen Medienkörpers (10) über der elektrischen Eigenschaft, vorzugsweise über der erfassten elektrischen Kapazität, zu vergleichen und in Abhängigkeit des Ergebnisses des Vergleichens den Füllstand des Mediums im Innenvolumen (A) des flexiblen Medienkörpers (10) zu bestimmen.

9. Flexibler Medienbehälter (1) nach Anspruch 7 oder 8, **dadurch gekennzeichnet, dass**
die Auswerteeinheit (16) ausgebildet ist, die erfasste elektrische Eigenschaft, vorzugsweise die erfasste elektrische Kapazität, mit einem Grenzwert der elektrischen Eigenschaft, vorzugsweise der erfassten elektrischen Kapazität, zu vergleichen und in Abhängigkeit des Ergebnisses des Vergleichens bei Erreichen oder Überschreiten des Grenzwertes einen vorbestimmten Füllstand, vorzugsweise einen maximalen Füllstand, des Mediums im Innenvolumen (A) des flexiblen Medienkörpers (10) zu erkennen.

10. Flexibler Medienbehälter (1) nach einem der Ansprüche 7 bis 9, **dadurch gekennzeichnet, dass**
die Auswerteeinheit (16) ausgebildet ist, eine Information und/oder einen Hinweis über den Füllstand des Mediums im Innenvolumen (A) des flexiblen Medienkörpers (10) auszugeben.

11. Kombinierter Medienbehälter (2), insbesondere für Fahrzeuge,
mit wenigstens einem flexiblen Medienbehälter (1) nach einem der vorangehenden Ansprüche und
mit einem starren Außenbehälter (20), welcher den flexiblen Medienbehälter (1) im Wesentlichen umschließt.

## Claims

1. Flexible media container (1)
having a flexible media body (10) which substantially surrounds an internal volume (A), and
having at least one first container opening (11) which is designed to connect the internal volume (A) of the flexible media body (10) to its environment, wherein at least one flexible sensor element (15) is present which is designed and arranged to capture at least one electrical property, preferably an electrical capacitance, at least in sections within the internal volume (A) of the flexible media body (10), with the result that it is possible to draw a conclusion about the filling level of a medium in the internal volume (A) of the flexible media body (10) from the captured electrical property, preferably from the captured electrical capacitance,
wherein the flexible media body (10) has at least one first flexible layer (13) which surrounds the internal volume (A) at least in sections, wherein the first flexible layer (13), as a barrier layer (13), is designed to keep the medium in the internal volume (A),
wherein a first electrode (15a) and/or a second electrode (15b) of the sensor element (15) is/are arranged on the first flexible layer (13) in a manner facing away from the internal volume (A),
**characterized in that**
the first electrode (15a) and/or the second electrode (15b) has/have a point-like design.

2. Flexible media container (1) according to Claim 1, **characterized in that** the flexible sensor element (15) has a first electrode (15a) and a second electrode (15b) which are designed and arranged to capture an electrical capacitance between them as an electrical property.

3. Flexible media container (1) according to Claim 2, **characterized in that** the first electrode (15a) and the second electrode (15b) are arranged to capture the electrical capacitance between them at least in sections through the internal volume (A) of the flexible media body (10).

4. Flexible media container (1) according to one of the preceding claims,
**characterized in that**
the flexible sensor element (15), preferably its first electrode (15a) and/or second electrode (15b), is in the form of printed electronics.

5. Flexible media container (1) according to one of the preceding claims,
**characterized in that**
the flexible media body (10) has at least one second flexible layer (14) which is arranged at least in sections on the first layer (13) and on the flexible sensor element (15), preferably on its first electrode (15a) and/or second electrode (15b), in a manner facing away from the internal volume (A).

6. Flexible media container (1) according to Claim 5, **characterized in that** the second flexible layer (14), as a protective layer (14), is designed to protect the flexible sensor element (15), preferably its first electrode (15a) and/or second electrode (15b), from external influences.

7. Flexible media container (1) according to one of the preceding claims,
**characterized by**
at least one evaluation unit (16) which is designed to receive a captured electrical property, preferably an electrical capacitance, from the flexible sensor element (15) and to draw a conclusion about the filling level of the medium in the internal volume (A) of the flexible media body (10) from the captured electrical property, preferably from the captured electrical capacitance.

8. Flexible media container (1) according to Claim 7, **characterized in that** the evaluation unit (16) is designed to compare the captured electrical property, preferably the captured electrical capacitance, with a linear profile of the filling level of the medium in the internal volume (A) of the flexible media body (10) against the electrical property, preferably against the captured electrical capacitance, and to determine the filling level of the medium in the internal volume (A) of the flexible media body (10) on the basis of the comparison result.

9. Flexible media container (1) according to Claim 7or 8, **characterized in that** the evaluation unit (16) is designed to compare the captured electrical property, preferably the captured electrical capacitance, with a limit value of the electrical property, preferably of the captured electrical capacitance, and to identify a predetermined filling level, preferably a maximum filling level, of the medium in the internal volume (A) of the flexible media body (10) on the basis of the comparison result when the limit value is reached or exceeded.

10. Flexible media container (1) according to one of Claims 7 to 9, **characterized in that**
the evaluation unit (16) is designed to output information and/or an indication of the filling level of the medium in the internal volume (A) of the flexible media body (10).

11. Combined media container (2), in particular for vehicles,
having at least one flexible media container (1) according to one of the preceding claims, and
having a rigid outer container (20) which substantially surrounds the flexible media container (1).

## Revendications

1. Récipient de milieu souple (1), comprenant
un corps de milieu souple (10) qui enferme substantiellement un volume intérieur (A), et
au moins une première ouverture de récipient (11) qui est réalisée pour relier le volume intérieur (A) du corps de milieu souple (10) à son environnement,
dans lequel au moins un élément capteur souple (15) est présent qui est réalisé et disposé de façon à détecter au moins une propriété électrique, de préférence une capacité électrique, au moins par endroits à l'intérieur du volume intérieur (A) du corps de milieu souple (10), de sorte qu'à partir de la propriété électrique détectée, de préférence à partir de la capacité électrique détectée, il est possible de tirer une conclusion sur le niveau de remplissage d'un milieu dans le volume intérieur (A) du corps de milieu souple (10), dans lequel le corps de milieu souple (10) présente au moins une première couche souple (13) qui enferme le volume intérieur (A) au moins par endroits, la première couche souple (13) étant réalisée sous forme de couche barrière (13) pour retenir le milieu dans le volume intérieur (A),
dans lequel une première électrode (15a) et/ou une deuxième électrode (15b) de l'élément capteur (15) est/sont disposée(s) sur la première couche souple (13) de manière détournée du volume intérieur (A),
**caractérisé en ce que** la première électrode (15a) et/ou la deuxième électrode (15b) est/sont réalisée(s) en forme de point.

2. Récipient de milieu souple (1) selon la revendication 1, **caractérisé en ce que** le élément capteur souple (15) présente une première électrode (15a) et une deuxième électrode (15b) qui sont réalisées et disposées pour détecter entre elles une capacité électrique en tant que propriété électrique.

3. Récipient de milieu souple (1) selon la revendication 2, **caractérisé en ce que** la première électrode (15a) et la deuxième électrode (15b) sont disposées pour détecter entre elles au moins par endroits la capacité électrique à travers le volume intérieur (A) du corps de milieu souple (10).

4. Récipient de milieu souple (1) selon l'une quelconque des revendications précédentes, **caractérisé en ce que** l'élément capteur souple (15), de préférence la première électrode (15a) et/ou la deuxième électrode (15b) de celui-ci, est réalisé comme un dispositif électronique imprimé.

5. Récipient de milieu souple (1) selon l'une quelconque des revendications précédentes, **caractérisé en ce que** le corps de milieu souple (10) présente au moins une deuxième couche souple (14) qui est disposée de manière détournée du volume intérieur (A) au moins par endroits sur la première couche (13) et sur l'élément capteur souple (15), de préférence sur la première électrode (15a) et/ou la deuxième électrode (15b) de celui-ci.

6. Récipient de milieu souple (1) selon la revendication 5, **caractérisé en ce que** la deuxième couche souple (14) est réalisée comme une couche de protection (14) pour protéger l'élément capteur souple (15), de préférence la première électrode (15a) et/ou la deuxième électrode (15b) de celui-ci, des influences extérieures.

7. Récipient de milieu souple (1) selon l'une quelconque des revendications précédentes, **caractérisé par** au moins une unité d'évaluation (16) qui est réalisée pour recevoir une propriété électrique détectée, de préférence une capacité électrique, de l'élément capteur souple (15), et pour tirer une conclusion sur le niveau de remplissage du milieu dans le volume intérieur (A) du corps de milieu souple (10) à partir de la propriété électrique détectée, de préférence à partir de la capacité électrique détectée.

8. Récipient de milieu souple (1) selon la revendication 7, **caractérisé en ce que** l'unité d'évaluation (16) est réalisée pour comparer la propriété électrique détectée, de préférence la capacité électrique détectée, avec un tracé linéaire du niveau de remplissage du milieu dans le volume intérieur (A) du corps de milieu souple (10) par rapport à la propriété électrique, de préférence par rapport à la capacité électrique détectée, et en fonction du résultat de la comparaison, pour déterminer le niveau de remplissage du milieu dans le volume intérieur (A) du corps de milieu souples (10).

9. Récipient de milieu souple (1) selon la revendication 7 ou 8, **caractérisé en ce que** l'unité d'évaluation (16) est réalisée pour comparer la propriété électrique détectée, de préférence la capacité électrique détectée, avec une valeur limite de la propriété électrique détectée, de préférence de la capacité électrique détectée, et en fonction du résultat de la comparaison, si la valeur limite est atteinte ou dépassée, pour identifier un niveau de remplissage prédéterminé, de préférence un niveau de remplissage maximal, du milieu dans le volume intérieur (A) du corps de milieu souple (10).

10. Récipient de milieu souple (1) selon l'une quelconque des revendications 7 à 9, **caractérisé en ce que** l'unité d'évaluation (16) est réalisée pour sortir une information et/ou une indication concernant le niveau de remplissage du milieu dans le volume intérieur (A) du corps de milieu souple (10).

11. Récipient de milieu combiné (2), en particulier pour des véhicules, comprenant
au moins un récipient de milieu souple (1) selon l'une quelconque des revendications précédentes, et
un récipient extérieur rigide (20) qui enferme substantiellement le récipient de milieu souple (1).
